(19)

**Europäisches Patentamt**
**European Patent Office**
**Office européen des brevets**

(11) **EP 2 348 302 A1**

(12) **EUROPEAN PATENT APPLICATION**
published in accordance with Art. 153(4) EPC

(43) Date of publication:
**27.07.2011 Bulletin 2011/30**

(51) Int Cl.:
***G01N 21/27*** *(2006.01)*

(21) Application number: **09825968.2**

(22) Date of filing: **04.08.2009**

(86) International application number:
**PCT/JP2009/063786**

(87) International publication number:
**WO 2010/055715 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **14.11.2008 JP 2008292078**

(71) Applicant: **IHI Corporation**
**Tokyo 135-8710 (JP)**

(72) Inventors:
• **IZAWA Jun**
 **Tokyo 135-8710 (JP)**
• **HAMANO Yasunori**
 **Tokyo 135-8710 (JP)**
• **KUBOTA Nobuhiko**
 **Tokyo 135-8710 (JP)**

(74) Representative: **Grünecker, Kinkeldey, Stockmair & Schwanhäusser Anwaltssozietät**
**Leopoldstrasse 4**
**80802 München (DE)**

(54) **APPARATUS FOR DETERMINING CONCENTRATION OF GASEOUS COMPONENT**

(57)  A gaseous component concentration determination apparatus that can obtain a sufficiently large light detection value and determine a concentration of a target component in a desired section without using a laser emitter of a high laser intensity or a large light collector is provided. The gaseous component concentration determination apparatus includes: a laser emitter 3 that emits first laser beam whose wavelength is a light absorption wavelength of the target component, and second laser beam whose wavelength is a non-absorption wavelength of the target component; a first scatterer 5 and a second scatterer 7 that are located within an irradiation area of the first laser beam and the second laser beam, and spaced apart in an emission direction of the first laser beam and the second laser beam; a photodetector 9 that detects first scattered light resulting from scattering of the first laser beam at the first scatterer 5, second scattered light resulting from scattering of the second laser beam at the first scatterer 5, third scattered light resulting from scattering of the first laser beam at the second scatterer 7, and fourth scattered light resulting from scattering of the second laser beam at the second scatterer 7; and a concentration calculator 11 that calculates the concentration of the target component between the first scatterer 5 and the second scatterer 7, based on detection values obtained by the photodetector 9.

FIG. 1

**Description**

BACKGROUND OF THE INVENTION

Technical Field of the Invention

The present invention relates to a gaseous component concentration determination apparatus for determining a concentration of a target component in a gas using laser beam.

Description of the Related Art

A concentration of a specific target component contained in a gas can be determined in the following manner. Laser beam having an absorption wavelength $\lambda_1$ unique to the target component is emitted from a laser emitter to the remotely-located gas. Scattered light resulting from scattering of the laser beam of the absorption wavelength $\lambda_1$ by dust in the gas or by the gas itself is detected by a photodetector provided near the laser emitter. In this case, a time of detecting the scattered light by the photodetector differs according to a distance between the laser emitter and a position at which the laser beam is scattered. By converting this time property to a distance property, a detection signal of scattered light from a desired section is obtained. Based on the obtained detection signal, an attenuation rate of light of the wavelength $\lambda_1$ in the section with respect to the emitted laser beam is calculated.
Likewise, laser beam having a non-absorption wavelength $\lambda_2$ of the target component is emitted from the laser emitter to the same remotely-located gas, to calculate an attenuation rate of light of the wavelength $\lambda_2$ in the same section.
A light attenuation rate by the target component can be obtained based on the attenuation rate of light of the wavelength $\lambda_1$ in the section and the attenuation rate of light of the wavelength $\lambda_2$ in the section. Further, the concentration of the target component in the section can be determined from the obtained attenuation rate and known reference data.
Note that Patent Documents 1 and 2 are listed below as prior art documents of this application.
[Patent Document 1] Japanese Patent No. 3861059
[Patent Document 2] Japanese Patent No. 3699682

In the case of detecting the concentration of the target component in the gas in the above-mentioned manner, a very expensive apparatus needs to be used for the following reason.
The light scattered by the dust in the gas or by the gas itself has a very low intensity. Accordingly, it is necessary to use a laser emitter capable of emitting laser beam of a sufficiently high intensity so that the photodetector can detect the scattered light.
However, particularly when emitting the laser beam outdoors, there is a laser intensity constraint for safety reasons. To make up for such a laser intensity, a large, difficult-to-handle, and expensive light collector or the like needs to be used in order to detect weak scattered light.
Besides, the scattered light reflects at every angle, and so attenuates in proportion to the square of the distance. Therefore, scattered light from one end of the section that is subject to the determination and scattered light from the other end of the section have a significant difference in intensity, at the position of the photodetector. This requires an expensive photodetector having a wide detectable intensity range.

SUMMARY OF THE INTENTION

The present invention was conceived to solve the conventional problem mentioned above. An object of the present invention is to provide a gaseous component concentration determination apparatus that can obtain a sufficiently large light detection value and determine a concentration of a target component in a desired section, without using a laser emitter of a high laser intensity or a large light collector.
To achieve the stated object, according to the present invention, there is provided a gaseous component concentration determination apparatus that emits laser beam into a gas, and detects a concentration of a target component in the gas based on the laser beam passing through the gas, the gaseous component concentration determination apparatus including: a laser emitter that emits first laser beam whose wavelength is a light absorption wavelength of the target component, and second laser beam whose wavelength is a non-absorption wavelength of the target component; a first scatterer and a second scatterer that are located within an irradiation area of the first laser beam and the second laser beam, and spaced apart in an emission direction of the first laser beam and the second laser beam; a photodetector that detects first scattered light resulting from scattering of the first laser beam at the first scatterer, second scattered light resulting from scattering of the second laser beam at the first scatterer, third scattered light resulting from scattering of the first laser beam at the second scatterer, and fourth scattered light resulting from scattering of the second laser beam at the second scatterer; and a concentration calculator that calculates the concentration of the target component between the first scatterer and the second scatterer, based on detection values of the first scattered light, the second scattered light, the third scattered light, and the fourth scattered light obtained by the photodetector.

The gaseous component concentration determination apparatus according to the present invention described above calculates the concentration of the target component based on the detection value of light scattered by the first and second scatterers, and not based on the detection value of light scattered by the gas. Therefore, it is possible to obtain a sufficiently large light detection value and determine the concentration of the target component in a desired section, without using a laser emitter of a high laser intensity or a large light collector.

That is, since laser beam scattered by the gas is weak, a sufficiently large scattered light detection value for target component concentration calculation cannot be obtained unless a laser emitter of a high laser intensity or a large light collector is used. According to the present invention, however, the first and second scatterers are provided so that strong light scattered by the first and second scatterers is detected. Hence, a sufficiently large scattered light detection value for target component concentration calculation can be obtained to calculate the concentration of the target component in the desired section, without using a laser emitter for emitting high-intensity laser beam or a large light collector.

In addition, the first and second scatterers scatter laser beam over a predetermined wide area, and accordingly there is no need to precisely adjust the orientations of the first and second scatterers with respect to the laser emitter.

According to a preferred embodiment of the present invention, the second scatterer is located more remotely than the first scatterer from the photodetector, and the second scatterer scatters more laser beam than the first scatterer.

According to this embodiment, the second scatterer is located more remotely than the first scatterer from the photodetector, and the second scatterer scatters more laser beam than the first scatterer. Hence, even scattered light from the second scatterer located more remotely can reach the photodetector with an appropriate intensity, as follows. Since light scatters in various directions, the scattered light decreases in intensity in proportion to the square of the propagation distance. This being so, the intensity of scattered light from the second scatterer located more remotely from the photodetector is significantly lower than the intensity of scattered light from the first scatterer located closer to the photodetector, at the position of the photodetector. This requires the photodetector to have a wide detectable intensity range.

According to the above preferred embodiment, however, the second scatterer scatters more laser beam, so that the scattered light from the second scatterer can reach the photodetector with an appropriate intensity, too. For example, by appropriately setting an extent to which the second scatterer scatters laser beam, the intensity of the scattered light from the second scatterer when reaching the photodetector can be made similar (preferably equal) to the intensity of the scattered light from the first scatterer when reaching the photodetector. In such a case, even a photodetector having a small detectable intensity range is applicable.

Moreover, according to a preferred embodiment of the present invention, each of the first scatterer and the second scatterer has a form in which a plurality of wire-like members are arranged with an interval, a lattice form, or a spherical form.

According to the present invention described above, it is possible to obtain a sufficiently large light detection value and determine a concentration of a target component in a desired section, without using a laser emitter of a high laser intensity or a large light collector.

BRIEF DESCRIPTION OF THE DRAWINGS

FIG. 1 is a diagram showing a structure of a gaseous component concentration determination apparatus according to a first embodiment of the present invention.
FIG. 2 shows waveforms of detection signals obtained by a photodetector.
FIG. 3 is a diagram showing a structure of a gaseous component concentration determination apparatus according to a second embodiment of the present invention.
FIG. 4 is a diagram showing a structure of a gaseous component concentration determination apparatus according to a third embodiment of the present invention.
FIG. 5 is a diagram showing a structure of a gaseous component concentration determination system that uses the gaseous component concentration determination apparatus.

DESCRIPTION OF THE PREFERRED EMBODIMENT

The following describes a best mode for carrying out the present invention, with reference to drawings. Note that common parts in the drawings are given the same reference numerals, and repeated description is omitted.

[First Embodiment]

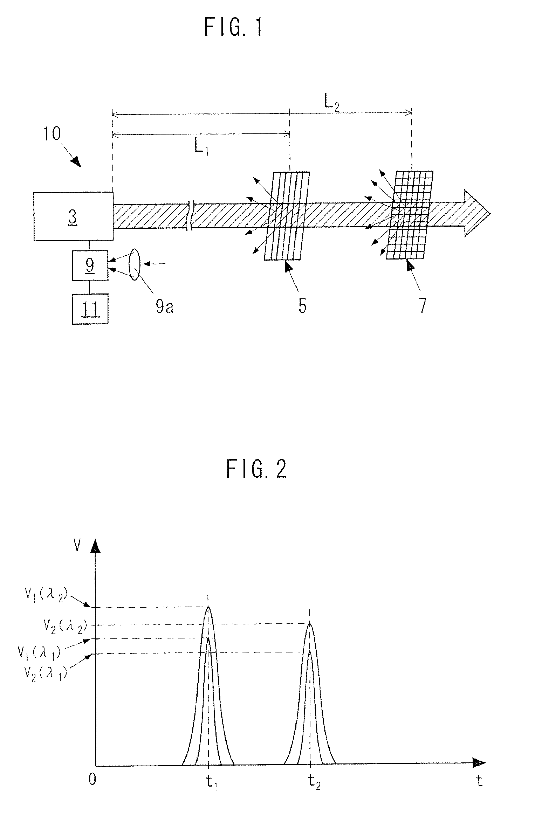

FIG. 1 is a diagram showing a structure of a gaseous component concentration determination apparatus 10 according to a first embodiment of the present invention. This gaseous component concentration determination apparatus 10 emits laser beam into a gas, and detects a concentration of a target component in the gas based on the laser beam passing through the gas. For example, the target component is carbon dioxide, ammonia, methane, sulfide gas ($SO_x$) such as sulfur dioxide gas ($SO_2$), or nitrogen oxide gas ($NO_x$) such as nitric oxide (NO).
The gaseous component concentration determination apparatus 10 includes a laser emitter 3, a first scatterer 5 and a second scatterer 7, a photodetector 9, and a concentration calculator 11.
The laser emitter 3 emits first laser beam whose wavelength is a light absorption wavelength $\lambda_1$ of the target component and second laser beam whose wavelength is a non-absorption wavelength $\lambda_2$ of the target component. Preferably, the first laser beam has only a wavelength component of the light absorption wavelength $\lambda_1$, whereas the second laser beam includes no component of the light absorption wavelength $\lambda_1$.
The laser emitter 3 has an optical system (not shown) for spreading laser beam to an appropriate dimension, in a direction orthogonal to a laser beam travel direction. By this optical system, the laser beam is emitted from the laser emitter 3 with such the dimension. This dimension enables the laser beam to easily impinge on the first scatterer 5 and the second scatterer 7.
The first scatterer 5 and the second scatterer 7 are located within an irradiation area of the first laser beam and the second laser beam, and spaced apart at a predetermined interval in an emission direction of the first laser beam and the second laser beam. This interval can be set arbitrarily.
The photodetector 9 detects first scattered light resulting from scattering of the first laser beam at the first scatterer 5, second scattered light resulting from scattering of the second laser beam at the first scatterer 5, third scattered light resulting from scattering of the first laser beam at the second scatterer 7, and fourth scattered light resulting from scattering of the second laser beam at the second scatterer 7.
The concentration calculator 11 calculates a concentration of the target component in a section between the first scatterer 5 and the second scatterer 7, based on detection values of the first, second, third, and fourth scattered light obtained by the photodetector 9.
The following describes the structure of the gaseous component concentration determination apparatus 10 in more detail.
The second scatterer 7 is located more remotely than the first scatterer 5 from the photodetector 9. In this case, preferably, the second scatterer 7 scatters more laser beam than the first scatterer 5.
In the example shown in FIG. 1, the first scatterer 5 and the second scatterer 7 are formed by arranging a plurality of wire-like members in parallel with a predetermined interval. Here, it is preferable that the wire-like members of the second scatterer 7 have a higher density than the wire-like members of the first scatterer 5. For instance, as shown in FIG. 1, the first scatterer 5 has a form in which a plurality of wire-like members is arranged in parallel with a predetermined interval $L_1$ from the laser emitter 3. Meanwhile, the second scatterer 7 has a lattice form in which, in addition to such a plurality of wire-like members arranged in parallel, a plurality of wire-like members in a direction intersecting (e.g. orthogonal to) the above-mentioned plurality of wire-like members are further arranged in parallel with a predetermined interval $L_2$ from the laser emitter 3.
When laser beam from the laser emitter 3 passes through the first scatterer 5, a laser beam portion colliding against the first scatterer 5 is lost. This loss is complemented by light diffraction after passing through the first scatterer 5. In view of this, a size of a component (wire-like member) of the first scatterer 5 is set so that the loss is complemented by the time the laser beam passing through the first scatterer 5 reaches the second scatterer 7.
The first scatterer 5 and the second scatterer 7 need not be permanently disposed at both ends of the section that is subject to the target component concentration determination. That is, the first scatterer 5 and the second scatterer 7 may be temporarily disposed at both ends of the section only during the target component concentration determination.
As shown in FIG. 1, the photodetector 9 has a convex lens 9a as a light collector. In this embodiment, the first to fourth scattered light which are relatively high in intensity reach the photodetector 9, and so the convex lens 9a need not be large in size.

(Concentration Calculation)

FIG. 2 shows detection signals obtained by the photodetector 9. In FIG. 2, a horizontal axis represents a time, and a vertical axis represents a voltage value proportional to an intensity of each of the above-mentioned first, second, third, and fourth scattered light. The detection signals are displayed on a display device (not shown). In FIG. 2, $t_1 = 2L_1/c$, and $t_2 = 2L_2/c$, where c denotes a light speed.
Based on the Lambert-Beer law, the concentration of the target component in the section from the first scatterer 5 to the second scatterer 7 can be calculated in the following way.

First, the following equation (1) holds according to the Lambert-Beer law.

$$T_x(\lambda_x) = T_x' \times \exp\{-2\alpha(\lambda_x) \times N_x \times L_x\} \qquad \cdots \quad (1)$$

In this equation (1), each character has the following definition.

Subscript x: 1 or 2
$T_x(\lambda_x)$: transmittance of light having a wavelengths $\lambda_x$, in the distance $L_1$ or $L_2$ shown in FIG. 1
$T_x'$: transmittance of light due to a factor (e.g., the first scatterer 5 and the second scatterer 7) other than light absorption by the gas, in the distance $L_1$ or $L_2$ shown in FIG. 1
$\alpha(\lambda_x)$: an absorption coefficient of the target component per unit length and unit concentration, for light having the wavelength $\lambda_x$
$N_x$: an average concentration of the target component in a distance $L_x$
$L_x$: the distance $L_1$ or $L_2$ shown in FIG. 1

Here, a light detection intensity of the photodetector 9 is proportional to $T_x(\lambda_x)$. This being so, when E denotes a conversion factor from $T_x(\lambda_x)$ to a voltage, the following equations (2) and (3) hold for $L_1$.

$$V_1(\lambda_1) = E \times T_1' \times \exp\{-2\alpha(\lambda_1) \times N_1 \times L_1\} \qquad \cdots \quad (2)$$

$$V_1(\lambda_2) = E \times T_1' \times \exp\{-2\alpha(\lambda_2) \times N_1 \times L_1\} \qquad \cdots \quad (3)$$

Dividing the equation (2) by the equation (3) yields the following equation (4).

$$V_1(\lambda_1)/V_1(\lambda_2) = \exp[-2N_1L_1\{\alpha(\lambda_1) - \alpha(\lambda_2)\}] \qquad \cdots \quad (4)$$

$V_1(\lambda_1)$ and $V_1(\lambda_2)$ can be obtained by measurement by the photodetector 9, and $L_1$, $\alpha(\lambda_1)$, and $\alpha(\lambda_2)$ are known. Hence, by transforming the equation (4), $N_1$ is obtained according to the following equation (5).

$$N_1 = -\ln\{V_1(\lambda_1)/V_1(\lambda_2)\}/2L_1\{\alpha(\lambda_1) - \alpha(\lambda_2)\} \qquad \cdots \quad (5)$$

Likewise, for $L_2$, $N_2$ is obtained according to the following equation (6).

$$N_2 = -\ln\{V_2(\lambda_1)/V_2(\lambda_2)\}/2L_2\{\alpha(\lambda_1) - \alpha(\lambda_2)\} \qquad \cdots \quad (6)$$

On the other hand, a concentration Nt of the target component in the desired section is expressed by the following equation (7).

$$Nt = (N_1 \times L_1 - N_2 \times L_2)/(L_2 - L_1) \qquad \cdots \quad (7)$$

Accordingly, by substituting the equations (5) and (6) and $L_1$ and $L_2$ into the equation (7), the concentration Nt of the target component can be calculated.
Such calculation of the concentration Nt is executed by the concentration calculator 11. That is, the operations of the equations (5) to (7) are executed by the concentration calculator 11.

The gaseous component concentration determination apparatus 10 of the first embodiment calculates the concentration of the target component in the gas based on the detection value of light scattered by the first scatterer 5 and the second scatterer 7, and not based on the detection value of light scattered by the gas. Therefore, it is possible to obtain a sufficiently large light detection value and determine the concentration of the target component in the desired section, without using a laser emitter of a high laser intensity or a large light collector.

That is, since laser beam scattered by the gas is weak, a sufficiently large scattered light detection value for target component concentration calculation cannot be obtained unless the laser emitter 3 of a high laser intensity or a large light collector is used. According to the present invention, however, the first scatterer 5 and the second scatterer 7 are provided so that strong light scattered by the first scatterer 5 and the second scatterer 7 is detected. Hence, a sufficiently large scattered light detection value for target component concentration calculation can be obtained to calculate the concentration of the target component in the desired section, without using the laser emitter 3 for emitting high-intensity laser beam or a large light collector.

In addition, since the first scatterer 5 and the second scatterer 7 scatter laser beam over a predetermined wide area, there is no need to precisely adjust the orientations of the first scatterer 5 and the second scatterer 7 with respect to the laser emitter 3.

Moreover, according to the first embodiment, the second scatterer 7 scatters more laser beam, so that scattered light from the second scatterer 7 can reach the photodetector 9 with an appropriate intensity, too. Preferably, by appropriately setting an extent to which the second scatterer 7 scatters laser beam, the intensity of the scattered light from the second scatterer 7 when reaching the photodetector 9 is made equal to the intensity of the scattered light from the first scatterer 5 when reaching the photodetector 9. This allows even the photodetector 9 having a small detectable intensity range to be used.

[Second Embodiment]

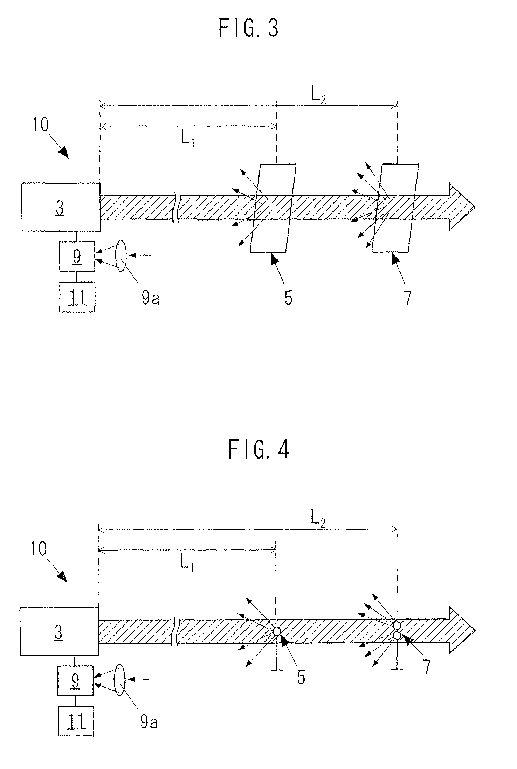

FIG. 3 is a diagram showing a structure of the gaseous component concentration determination apparatus 10 according to a second embodiment of the present invention. As shown in the drawing, the first scatterer 5 and the second scatterer 7 are formed by intentionally adding a scratch, a stain, an inclusion, or a combination thereof to glass. The other structure of the second embodiment is the same as the first embodiment.

In the second embodiment, an extent or a density of the scratch, the stain, the inclusion, and the like added to the glass 7 is higher than an extent or a density of the scratch, the stain, the inclusion, and the like added to the glass 5, in order to cause the second scatterer 7 to scatter more laser beam than the first scatterer 5.

[Third Embodiment]

FIG. 4 is a diagram showing a structure of the gaseous component concentration determination apparatus 10 according to a third embodiment of the present invention.

As shown in the drawing, the first scatterer 5 and the second scatterer 7 are spherical members attached to an end of a pole. The other structure of the third embodiment is the same as the first embodiment.

In the third embodiment, the number of spherical members constituting the second scatterer 7 is larger than the number of spherical members constituting the first scatterer 5 in FIG. 4, in order to cause the second scatterer 7 to scatter more laser beam than the first scatterer 5.

[Gaseous Component Concentration Determination System]

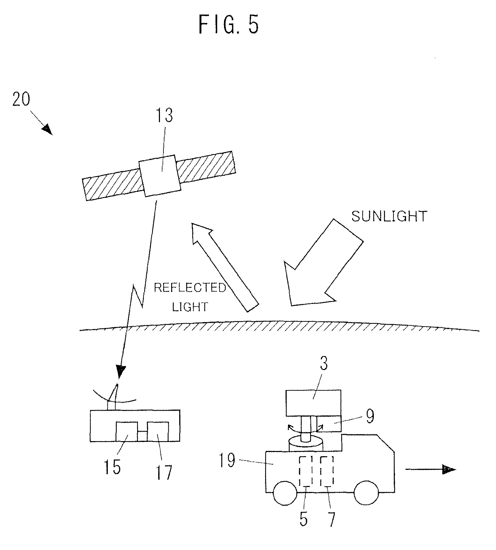

FIG. 5 is a diagram showing a structure of a gaseous component concentration determination system 20 that uses the gaseous component concentration determination apparatus 10 described above. This gaseous component concentration determination system 20 includes the gaseous component concentration determination apparatus 10 of the first, second, or third embodiment described above, an environmental research satellite 13, a data analyzer 15, a display device 17, and a moving means 19.

The environmental research satellite 13 detects reflected light resulting from reflection of sunlight on a ground surface or a water surface, and transmits the detection data. The detection data includes position data indicating a transmissive area of the reflected light.

The data analyzer 15 receives the detection data transmitted from the environmental research satellite 13, and analyzes the detection data. This analysis determines whether or not there is any area in which the concentration of the target component is higher than a predetermined prescribed value. When determining that there is an area in which the concentration of the target component is higher than the predetermined prescribed value, the data analyzer 15 regards this as an abnormality, and outputs an abnormality signal. This abnormality signal includes position information indicating a position/area of the area in which the concentration of the target component is higher than the predetermined prescribed value.

The display device 17 receives the abnormality signal from the data analyzer 15, and displays the gaseous component whose concentration is higher than the prescribed value and the position/area in which the concentration of the gaseous component is higher than the prescribed value, based on the abnormality signal. Having viewed this display, a person can move the gaseous component concentration determination apparatus 10 to a destination (the position/ area or its vicinity) by the moving means 19. Note that the display device 17 may be mounted on the moving means 19.

In the example shown in FIG. 5, the moving means 19 is a vehicle carrying the gaseous component concentration determination apparatus 10. Alternatively, the moving means 19 may be an airplane, a balloon, an airship, a ship, or the like carrying the gaseous component concentration determination apparatus 10. When the moving means 19 reaches the destination, the person arranges the laser emitter 3, the photodetector 9, the first scatterer 5, and the second scatterer 7 in the desired positions as shown in FIG. 1, as an example. Alternatively, the laser emitter 3 and the photodetector 9 may be left on the moving means 19.

Once the first scatterer 5 and the second scatterer 7 have been arranged, the concentration of the target component in the section between the first scatterer 5 and the second scatterer 7 is determined in the same way as in the first embodiment.

In the case where the target component is $CO_2$, it is preferable that the moving means 19 does not emit $CO_2$ (e.g. an electric vehicle).

In the gaseous component concentration determination system 20 described above, whether or not there is any area in which the concentration of the target component in the gas is abnormal can be checked based on the detection data by the environmental research satellite 13. When such an area is detected, the gaseous component concentration determination apparatus 10 can be moved to the area by the moving means 19, to finely determine the concentration.

Thus, an abnormal concentration value of the target component in the gas can be finely detected over a wide area. Besides, this can be done merely by temporarily arranging the gaseous component concentration determination apparatus 10 in the determination target area, only during the concentration determination.

Each scatterer used in the present invention may be a scatterer other than those described in each embodiment.

Though the two scatterers 5 and 7 are used in each embodiment described above, three or more scatterers may be located within the irradiation area of the first laser beam and the second laser beam, and spaced apart in the emission direction of the first laser beam and the second laser beam. In this case, it is possible to simultaneously determine the concentration of the target component in a plurality of sections such as not only the section between the first scatterer 5 and the second scatterer 7 but also a section between the second scatterer and a third scatterer, by the same method as in the first embodiment.

In detail, the photodetector 9 detects fifth scattered light resulting from scattering of the first laser beam at the third scatterer and sixth scattered light resulting from scattering of the second laser beam at the third scatterer, in addition to the above-mentioned first to fourth scattered light. The concentration calculator 11 also simultaneously calculates the concentration of the target component between the second scatterer 7 and the third scatterer, based on the detection values of the third, fourth, fifth, and sixth scattered light obtained by the photodetector 9.

The present invention is not limited to the embodiments described above, and various changes can be made without departing from the scope of the present invention.

## Claims

1. A gaseous component concentration determination apparatus that emits laser beam into a gas, and detects a concentration of a target component in the gas based on the laser beam passing through the gas, the gaseous component concentration determination apparatus comprising:

   a laser emitter that emits first laser beam whose wavelength is a light absorption wavelength of the target component, and second laser beam whose wavelength is a non-absorption wavelength of the target component;
   a first scatterer and a second scatterer that are located within an irradiation area of the first laser beam and the second laser beam, and spaced apart in an emission direction of the first laser beam and the second laser beam;
   a photodetector that detects first scattered light resulting from scattering of the first laser beam at the first scatterer, second scattered light resulting from scattering of the second laser beam at the first scatterer, third scattered light resulting from scattering of the first laser beam at the second scatterer, and fourth scattered light resulting from scattering of the second laser beam at the second scatterer; and
   a concentration calculator that calculates the concentration of the target component between the first scatterer and the second scatterer, based on detection values of the first scattered light, the second scattered light, the third scattered light, and the fourth scattered light obtained by the photodetector.

2. The gaseous component concentration determination apparatus according to claim 1, wherein the second scatterer is located more remotely than the first scatterer from the photodetector, and
wherein the second scatterer scatters more laser beam than the first scatterer.

3. The gaseous component concentration determination apparatus according to claim 1 or 2, wherein each of the first scatterer and the second scatterer has a form in which a plurality of wire-like members are arranged with an interval, a lattice form, or a spherical form.

FIG. 1

FIG. 2

FIG. 3

FIG. 4

# FIG. 5

20

13

SUNLIGHT

REFLECTED
LIGHT

3

9

15   17

19

5   7

<table>
<tr><td colspan="2">**INTERNATIONAL SEARCH REPORT**</td><td>International application No.</td></tr>
<tr><td colspan="2"></td><td>PCT/JP2009/063786</td></tr>
</table>

A. CLASSIFICATION OF SUBJECT MATTER
G01N21/27(2006.01)i

According to International Patent Classification (IPC) or to both national classification and IPC

B. FIELDS SEARCHED

Minimum documentation searched (classification system followed by classification symbols)
G01N21/00-21/01, 21/17-21/61, G01S7/48-7/481, 17/00-17/95

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| Y | JP 56-089042 A  (Fujitsu Ltd.),<br>20 July, 1981 (20.07.81),<br>Page 2, lower left column, lines 5 to 17; Fig. 4<br>(Family: none) | 1,3 |
| Y | JP 11-295217 A  (Nashotekku Kabushiki Kaisha),<br>29 October, 1999 (29.10.99),<br>Par. Nos. [0001], [0007]<br>(Family: none) | 1-3 |
| Y | JP 63-009842 A  (Fujitsu Ltd.),<br>16 January, 1988 (16.01.88),<br>Fig. 1<br>& EP 219067 A2 | 1-3 |

[X] Further documents are listed in the continuation of Box C.     [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 August, 2009 (19.08.09) | Date of mailing of the international search report<br>01 September, 2009 (01.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

| INTERNATIONAL SEARCH REPORT | International application No. |
|---|---|
| | PCT/JP2009/063786 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2004-264048 A  (President of The University of Tokyo), 24 September, 2004 (24.09.04), Par. No. [0046]; Fig. 4 & WO 2004/070393 A1 | 3 |
| Y | JP 2008-197185 A  (Ricoh Co., Ltd.), 28 August, 2008 (28.08.08), Par. No. [0028]; Fig. 1 (Family: none) | 3 |
| A | JP 4-151546 A  (Anritsu Corp.), 25 May, 1992 (25.05.92), Figs. 2, 3 (Family: none) | 1-3 |
| A | JP 54-123997 A  (Mitsubishi Electric Corp.), 26 September, 1979 (26.09.79), Figs. 1, 3 (Family: none) | 1-3 |
| A | JP 2003-090796 A  (Nippon Steel Corp.), 28 March, 2003 (28.03.03), Par. No. [0025]; Figs. 1, 2 (Family: none) | 1-3 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3861059 B

- JP 3699682 B